(19) Europäisches Patentamt
European Patent Office
Office européen des brevets

(11) Publication number : **0 132 383 B2**

(12) # NEW EUROPEAN PATENT SPECIFICATION

(45) Date of publication of the new patent specification : **30.06.93 Bulletin 93/26**

(51) Int. Cl.$^5$ : **C10M 133/52,** C08F 8/42, C08F 8/44, C07F 5/02

(21) Application number : **84304928.9**

(22) Date of filing : **19.07.84**

(54) **Boration of polyamine dispersants with polyborate esters.**

(30) Priority : **25.07.83 US 516879**

(43) Date of publication of application : **30.01.85 Bulletin 85/05**

(45) Publication of the grant of the patent : **03.01.90 Bulletin 90/01**

(45) Mention of the opposition decision : **30.06.93 Bulletin 93/26**

(84) Designated Contracting States : **AT BE CH DE FR GB IT LI LU NL SE**

(56) References cited :
**EP-A- 0 090 629**
**EP-A- 0 118 203**
**US-A- 3 254 025**
**US-A- 3 697 574**
**US-A- 4 295 983**

(73) Proprietor : **AMOCO CORPORATION**
**200 East Randolph Drive**
**Chicago Illinois 60601 (US)**

(72) Inventor : **Basalay, Robert Joseph**
**1117 Catalpa Lane**
**Naperville, IL 60540 (US)**
Inventor : **Anderson, Ronald Leslie**
**25 W 246 Guston Avenue**
**Naperville, IL 60540 (US)**
Inventor : **Chamot, Ernest**
**530 East Hillside**
**Naperville, IL 60540 (US)**

(74) Representative : **Ritter, Stephen David et al**
**Mathys & Squire 10 Fleet Street**
**London EC4Y 1AY (GB)**

EP 0 132 383 B2

## Description

Background of the Invention

1. Field of the Invention

This invention relates to a method of preparing boron-containing dispersant additives for lubricating oils. More particularly, the invention relates to a process for the boration of conventional polyamine dispersants which involves reacting a polyamine dispersant with a polyborate ester and removing substantially all of the alcohol which is produced by the reaction.

2. Description of the Prior Art

The deterioration of a lubricating oil during service in an internal combustion engine results in the formation of varnish-like deposits and the generation of products which agglomerate to form sludge-like materials. Since this varnish and sludge interferes with efficient engine operation, it has become conventional practice to incorporate into lubricating oils certain chemical compositions which have the ability to reduce or prevent the formation of sludge and the deposition of varnish. These additives are broadly referred to as dispersants.

Among the many types of dispersants which have been developed, polyamine dispersants are highly effective and are widely used. For the purpose of this application, a polyamine dispersant is an oil-soluble composition which contaions at least one basic amine group and is effective as a dispersant additive for lubricating oils.

Fluorohydrocarbon elastomers are increasingly being used in fabricating the flexible seals which are used in internal combustion engines. These seals are used, for example, to prevent leakage of lubricants at the point where moving parts, such as a crankshaft, leave the engine. Any substantial leakage of lubricant from the engione is obviously undesirable.

Under certain laboratory conditions, engine seals prepared from fluorohydrocarbon compositions are subject to discoloration and mechanical deterioration when exposed to lubricating oils containing polyamine dispersants. The polyamine dispersants interact with the fluorohydrocarbon compositions of the seals, causing the seals to swell and to lose mechanical and dimensional integrity. The rate of attack of the fluorohydrocarbon compositions by a polyamine dispersant appears to be directly proportional to the concentration of polyamine dispersant and to the temperature. As a consequence of these laboratory results, there is a concern that many conventional polyamine dispersants may not be suitable for use in internal combustion engines which contain fluorohydrocarbon seals.

Polyborate esters can be regarded as partially esterified boron oxides. More specifically, these materials contain at least two boron atoms which are attached to each other through an oxygen atom bridge. In addition, they also contain at least one borate ester group of the formula

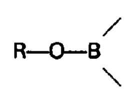

wherein R is either a substituted or unsubstituted hydrocarbyl group. These materials can be linear, branched or cyclic in character. Included within this class are the bis-borate esters, such as $(RO)_2B\text{-}O\text{-}B(OR)_2$, $(RO)(HO)B\text{-}O\text{-}B(OR)_2$, $(HO)_2B\text{-}O\text{-}B(OR)_2$, and $(HO)_2B\text{-}O\text{-}B(OH)(OR)$; metaborate esters of the formula:

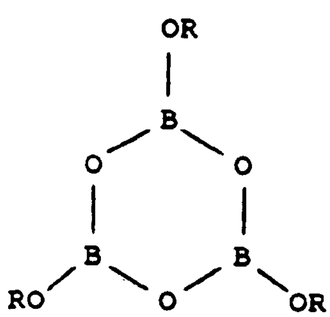

and also a plethora of more complex polymeric materials which, frequently, have a structure which is unknown

in detail.

The incorporation of boron into polyamine dispersants in well-known to the art. For example, U.S. Patent No. 3,254,025 (Le Suer) discloses the preparation of lubricant additives by the reaction of certain acylated nitrogen compositions with a boron compound selected from the group consisting of boron oxide, boron halides, boron acids, and esters of boron acids. Similarly, U.S. Patent No. 3,697,574 (Piasek et al.) discloses the preparation of lubricant additives by the reaction of Mannich condensation products with boron compounds such as boron oxide, boron oxide hydrate, boron trifluoride, boron tribromide, boron trichloride, $HBF_4$, boron acids such as boronic acids [alkyl-$B(OH)_2$ or aryl-$B(OH)_2$], ortho-boric acid ($H_3BO_3$), tetra-boric acid ($H_2B_4O_7$), metaboric acid ($HBO_2$), amides of such boron acids, and esters of such boron acids. However, the prior art fails to either teach or suggest a process for the boration of a polyamine dispersant which involves reaction with a polyborate ester followed by removal of substantially all of the alcohol which is formed by the reaction. In addition, the prior art fails to either teach or suggest that polyamine dispersants can be passivated toward fluorohydrocarbon compositions by reaction with specific amounts of a polyborate ester.

## Summary of the Invention

The present invention is directed to the discovery of an improved process for the preparation of borated polyamine dispersants which involves reaction of a polyamine dispersant with a polyborate ester followed by removal of substantially all of the resulting alcohol. We have found that the resulting product is effective in maintaining a high level of dispersancy in lubricating oils without causing deterioration of fluorohydrocarbon seals. In addition, the resulting product is a wear inhibitor and has a satisfactory flash point.

One embodiment of the invention is a process for the preparation of a borated polyamine dispersant which comprises: (a) reacting a polyamine dispersant with at least one polyborate ester, wherein said polyamine dispersant contains at least one amine group and at least one oil solubilising group containing at least about 40 carbon atoms, directly or indirectly bonded to a polar polyamine group, said polyamine dispersant reacts with the polyborate ester to release an alcohol, said polyborate ester is a derivative of at least one monohydroxy aliphatic alcohol which contains from 4 to 8 carbon atoms, and the amount of said polyborate ester is effective to provide from about 0.001 to about 2 weight percent boron based on the weight of said polyamine dispersant; and (b) removing substantially all of the alcohol which is produced by said reaction.

Another embodiment of the invention is the product of the above-described process.

A further embodiment of the invention is a lubricant composition which comprises a major portion of lubricating oil in combination with a minor portion of the product of the above-described process.

An object of this invention is to provide a new process for the preparation of borated polyamine dispersants.

Another object of this invention is to provide an improved process for the preparation of borated polyamine dispersants.

Another object of this invention is to provide a borated polyamine dispersant which possesses reduced haze and sediment.

A further object of this invention is to provide a borated polyamine dispersant which has a satisfactory flash point.

A still further object of this invention is to provide a modified polyamine dispersant which imparts high levels of dispersancy to crankcase lubricants without causing the deterioration of fluorohydrocarbon engine seals.

## Detailed Description of the Invention

Although polyamine dispersants are typically borated by reaction with materials such as boric acid, we have found that the resulting products frequently contain sediments and precipitates. These oil-insoluble sediments and precipitates render such products unsuitable for incorporation into a lubricant composition unless the product is first filtered. In contrast, the process of this invention eliminates the need for filtration and the associated loss of product, gives a clear product, and results in a better incorporation of boron into the product. In addition, the borated product of this invention has a satisfactory flash point and is more compatible with fluorohydrocarbon compositions than the polyamine dispersant starting material.

In the practice of this invention, the polyamine dispersant is reacted with an amount of polyborate ester which is effective to provide from about 0.001 to about 2 weight percent of boron calculated as the element and based on the weight of the polyamine dispersant. More preferably, however, an amount of polyborate ester is used which is effective to provide from about 0.05 to about 1 weight percent of boron based on the weight of the polyamine dispersant. Although any suitable reaction temperature can be used, the reaction temperature is desirably between about 20° and about 300°C, and preferably between about 50° and about 250°C. The reaction of the polyborate ester with the polyamine dispersant can be carried out in the presence of a nonreactive solvent or diluent, if desired. However, the reaction is preferably carried out in the absence of diluents.

The alcohol which is released by reaction of the polyborate ester with the polyamine dispersant must be removed in order to produce a product which has a satisfactory flash point. This removal can be carried out as the reaction proceeds, after completion of the reaction, or both during and after completion of the reaction. Any conventional technique can be used for removal of the alcohol, for example, distillation. A particularly convenient method involves carrying out the reaction at a temperature above the boiling point of the alcohol reaction product and removing this material from the reaction mixture by distillation as it is formed. Alternatively, the alcohol can be removed by distillation upon completion of the reaction. If desired, a streaam of inert gas, such as nitrogen, can be passed through the heated mixture to facilitate removal of the alcohol.

Suitable polyborate esters for use in the practice of this invention are selected from the group consisting of polyborate esters of monohydroxy aliphatic alcohols which contain from 4 to 8 carbon atoms. That is to say, suitable polyborate esters are derivatives of at least one monohydroxy aliphatic alcohol which contains from 4 to 8 carbon atoms. Such alcohols include, but are not limited to, 1-butanol, 2-methyl-1-propanol, 1-pentanol, 2-pentanol, 2-methyl-2-butanol, 1-hexanol, cyclohexanol, 4-methyl-2-pentanol, 1-octanol, and 2-octanol. In addition, the ratio of hydrocarbyloxy groups to boron atoms in the polyborate ester is desirably in the range from about 0.5 to about 1.5 and preferably from about 0.7 to about 1.2. Highly preferred polyborate esters for use in the practice of this invention are metaborate esters of the formula:

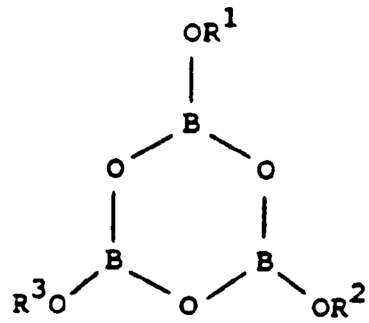

wherein $R^1$, $R^2$, and $R^3$ are independently selected from the group consisting of alkyl groups of from 4 to 8 carbon atoms.

The polyborate esters which are used in the practice of this invention possess physical properties, such as viscosity and volatility, which are such that the presence of some unreacted polyborate ester in the borated polyamine dispersant product does not adversely affect the suitability of the material as a lubricant additive. Indeed, such polyborate esters are highly effective wear and oxidation inhibitors for lubricants. In addition, the polyborate esters which are employed in the practice of this invention yield low molecular weight aliphatic alcohols upon reaction with the polyamine dispersant which are easy to remove from the boration product by conventional techniques, such as distillation.

Methods for the preparation of polyborate esters are well-known in the art and are described, for example, in U.S. Patent Nos. 3,099,677 (Hunter), 3,202,492 (Liao), 3,522,286 (Salvemini), and 3,755,408 (Cuneo). These patents are hereby incorporated by reference herein. A particularly preferred method for the preparation of polyborate esters for use in the practice of this invention is set forth in copending U.S. patent application Serial No. 467,951 (filed February 18, 1983). This application discloses the preparation of polyborate esters by a process which involves reacting ortho-boric acid with an alcohol in a substantially inert organic liquid which is immiscible with water and by continuously removing the water which is produced by the reaction.

The polyamine dispersants which are suitable for use in the practice of this invention are those which: (a) react with a polyborate ester to release an alcohol from the ester, and (b) contain at least one amine group which can be primary, secondary or tertiary. Although the invention is not to be so limited, it is believed that such polyamine dispersants contain functional groups, such as hydroxy, carboxyl, and primary or secondary amine groups, which are capable of reacting with a polyborate ester to release one of the hydrocarbyloxy groups of the ester as an alcohol. In any event, alcohol formation takes place when a polyborate ester is reacted with most conventional polyamine dispersants. In addition, suitable polyamine dispersants contain an oil-solubilizing group containing at least about 40 carbon atoms directly or indirectly bonded to a polar polyamine group. The dispersant can contain more than one of such oil- solubilizing groups per molecule as will be apparent from the description hereinafter. Many dispersants of this type are known in the art and are described in various patents. Any of such dispersants are suitable for use in the practice of this invention. The following are illustrative:

(1) Reaction products of an acylating agent, such as a monocarboxylic acid, dicarboxylic acid, polycarboxylic acid, or derivatives thereof, with compounds which contain amine groups. These products, hereinafter referred to as carboxylic polyamine dispersants, are described in many patents, including British patent specification No. 1,306,529 and the following U.S. Patents which are incorporated by reference herein:

| | | |
|---|---|---|
| 3,163,603 | 3,341,542 | 3,467,668 |
| 3,184,474 | 3,346,493 | 3,522,179 |
| 3,215,707 | 3,381,022 | 3,541,012 |
| 3,219,666 | 3,399,141 | 3,542,678 |
| 3,271,310 | 3,415,750 | 3,574,101 |
| 3,272,746 | 3,433,744 | 3,576,743 |
| 3,281,357 | 3,444,170 | 3,630,904 |
| 3,306,908 | 3,448,048 | 3,632,510 |
| 3,311,558 | 3,448,049 | 3,632,511 |
| 3,316,177 | 3,451,933 | 3,697,428 |
| 3,340,281 | 3,454,607 | 3,725,441 |
| | | Re 26,433 |

(2) Reaction products of aliphatic halides containing at least about 40 carbon atoms with amines, preferably polyalkylene polyamines, which are hereinafter characterized as alkyl polyamine dispersants. Examples of these materials are described in the following U.S. Patents which are incorporated by reference herein:

| | |
|---|---|
| 3,275,554 | 3,454,555 |
| 3,438,757 | 3,565,804 |

(3) Reaction products of an alkyl phenol, wherein the alkyl group is oil soluble, or an oxidized olefinic polymer with aliphatic aldehydes containing from 1 to 7 carbon atoms (especially formaldehyde and derivatives thereof) and amines (especially polyalkylene polyamines), which are hereinafter characterized as Mannich polyamine dispersants. Examples of these materials are described in the following U.S. Patents which are incorporated by reference herein:

| | | |
|---|---|---|
| 2,459,112 | 3,448,047 | 3,634,515 |
| 2,962,442 | 3,454,497 | 3,649,229 |
| 2,984,550 | 3,459;661 | 3,697,574 |
| 3,036,003 | 3,493,520 | 3,725,277 |
| 3,166,516 | 3,539,633 | 3,725,480 |
| 3,236,770 | 3,558,743 | 3,726,882 |
| 3,368,972 | 3,586,629 | 3,872,019 |
| 3,413,347 | 3,591,598 | 3,980,569 |
| 3,442,808 | 3,600,372 | 4,011,380 |
| | | 4,131,553 |

(4) Polymers containing basic amine groups and oil solubilizing groups (for example, pendant alkyl groups having at least about 8 carbon atoms), which are referred to hereinafter as polymeric polyamine dispersants. Such materials include, but are not limited to, interpolymers of decyl methacrylate, vinyl decyl ether or a relatively high molecular weight olefin with aminoalkyl acrylates and aminoalkyl acrylamides. Examples of such materials are set forth in the following U.S. Patents which are incorporated by reference herein:

| | |
|---|---|
| 3,329,658 | 3,666,730 |
| 3,449,250 | 3,687,849 |
| 3,519,565 | 3,702,300 |

(5) Products obtained by treating the above-described carboxylic polyamine, alkyl polyamine, Mannich polyamine, and polymeric polyamine dispersants with reagents such as urea, thiourea, carbon disulfide, aldehydes, ketones, carboxylic acids, polyalkenyl succinic anhydrides, nitriles, epoxides, phosphorous compounds and the like. Such products are referred to hereinafter as treated polyamine dispersants. Examplary materials of this type are described in the following U.S. Patents which are incorporated herein

by reference:

| | | |
|---|---|---|
| 3,200,107 | 3,367,943 | 3,502,677 |
| 3,216,936 | 3,373,111 | 3,513,093 |
| 3,256,185 | 3,442,808 | 3,539,633 |
| 3,278,550 | 3,455,831 | 3,573,010 |
| 3,312,619 | 3,455,832 | 3,591,598 |
| 3,366,569 | 3,493,520 | 3,600,372 |
| | | 3,649,659 |
| | | 3,702,757 |

The Mannich polyamine dispersants are those disclosed, for example, in the above-mentioned U.S. Patent 3,368,972, which also describes convenient methods for the preparation. The polyamine group therein is derived from polyamine compounds characterized by a radical of the structure -NH- wherein the two remaining valences of the nitrogen are satisfied by hydrogen, amino, or organic radicals bonded to said nitrogen atom. These compounds include aliphatic, aromatic, heterocyclic and carbocyclic polyamines. The source of oil-soluble hydrocarbyl group in the Mannich polyamine dispersant is usually a hydrocarbyl-substituted hydroxy aromatic compound comprising the reaction product of a hydroxy aromatic compound, accordiong to well-known procedures, with a hydrocarbyl donating agent or hydrocarbon source. The hydrocarbyl substituent provides substantial oil solubility to the hydroxy aromatic compound and, preferably, is substantially aliphatic in character. Commonly, the hydrocarbyl substituent is derived from a polyolefin having at least about 40 carbon atoms. The hydrocarbon source should be substantially free from pendant groups which render the hydrocarbyl group oil insoluble. Examples of acceptable substitient groups are halide, hydroxy, ether, carboxy, ester, amide, nitro and cyano. However, these substituent groups preferably comprise not more than about 10 weight percent of the hydrocarbon source.

The preferred hydrocarbon sources for preparation of the Mannich polyamine dispersants are those derived from substantially-saturated petroleum fractions and olefin polymers, preferably polymers of mono-olefins having from 2 to about 30 carbon atoms. The hydrocarbon source can be derived, for example, from polymers of olefins such as ethylene, propene, 1-butene, isobutene, 1-octene, 1-methylcyclohexene, 2-butene and 3-pentene. Also useful are copolymers of such olefins with other polymerizable olefinic substances such as styrene. In general, these copolymers should contain at least about 80 percent and preferably at least about 95 percent, on a weight basis, of units derived from the aliphatic mono-olefins to preserve oil solubility. The hydrocarbon source generally contains at least about 40 and preferably at least about 50 carbon atoms to provide substantial oil solubility to the dispersant. The olefin polymers having a number average molecular weight between about 600 and 5,000 are preferred for reasons of easy reactivity and low cost. However, polymers of higher molecular weight can also be used. Especially suitable hydrocarbon sources are isobutylene polymers.

The Mannich polyamine dispersants are generally prepared by reacting either a hydrocarbylsubstituted hydroxy aromatic compound or an oxidized olefinic polymer with an aldehyde and a polyamine. Typically, the substituted hydroxy aromatic compound is contacted with from about 0.1 to about 10 moles of polyamine and about 0.1 to about 10 moles of aldehyde per mole of substituted hydroxy aromatic compound. The reactants are mixed and heated to a temperature above about 80°C to initiate the reaction. Preferably, the reaction is carried out at a temperature from about 100° to about 250°C. The resulting Mannich product has a predominantly benzylamine linkage between the aromatic compound and the polyamine. The reaction can be carried out in an inert diluent, such as mineral oil, benzene, toluene, naphtha, ligroin, or other inert solvents to facilitate control of viscosity, temperature and reaction rate.

Polyamines are preferred for use in preparing the Mannich polyamine dispersants, and suitable polyamines include, but are not limited to, alkylene diamines and polyalkylene polyamines (and mixtures thereof) of the formula:

$$A-\underset{\displaystyle A}{\underset{|}{N}}-(-R-\underset{\displaystyle A}{\underset{|}{N}}-)_n-H$$

wherein n is an integer from about 1 to about 10, R is a divalent hydrocarbyl group of from 1 to about 18 carbon atoms, and each A is independently selected from the group consisting of hydrogen and hydrocarbyl containing up to 30 carbon atoms which can be substituted with one or two hydroxyl groups. Preferably, n is an integer from 2 to 8, R is a lower alkylene group of from 1 to 10 carbon atoms, and each A is independently selected from the group consisting of hydrogen and monovalent aliphatic groups containing up to 10 carbon atoms which

can be substituted with one or two hydroxyl groups. Most preferably, R is a lower alkylene group of from 2 to 6 carbon atoms and A is hydrogen.

Suitable polyamines for use in preparation of the Mannich polyamine dispersants include, but are not limited to, methylene polyamines, ethylene polyamines, butylene polyamines, propylene polyamines, pentylene polyamines, hexylene polyamines and heptylene polyamines. The higher homologs of such amines and related aminoalkyl-substituted piperazines are also included. Specific examples of such polyamines include ethylenediamine, triethylenetetramine, tris(2-aminoethyl)amine, propylenediamine, trimethylenediamine, hexamethylenediamine, decamethylenediamine, octamethylenediamine, di(heptamethylene)triamine, trimethylenediamine, pentaethylenehexamine, di(trimethylene)triamine, 2-heptyl -3-(2-aminopropyl)imidazoline, 1,3-bis(2-aminoethyl)imidazoline, 1-(2-aminopropyl)piperazine, 1,4-bis (2-aminoethyl)piperazine and 2-methyl-1-(2-aminobutyl)piperazine. Higher homologs, obtained by condensing two or more of the above mentioned amines, are also useful, as are the polyoxyalkylene polyamines.

The polyalkylene polyamines, examples of which are set forth above, are especially useful in preparing the Mannich polyamine dispersants for reasons of cost and effectiveness. Such polyamines are described in detail under the heading "Diamines and Higher Amines' in Krik-Othmer, *Encyclopedia of Chemical Technology*, Second Edition, Vol. 7, pp. 22-39. They are prepared most conveniently by the reaction of an alkylene dichloride with ammonia or by reaction of an ethylene dichloride with ammonia or by reaction of an ethylene imine with a ring-opening reagent, such as ammonia. These reactions result in the production of somewhat complex mixtures of polyalkylene polyamines which include cyclic condensation products, such as piperazines. Because of their availability these mixtures are particularly useful in preparing the Mannich polyamine dispersants. However, it will be appreciated that satisfactory dispersants can also be obtained by use of pure polyalkylene polyamines.

Alkylene diamines and polyalkylene polyamines having one or more hydroxyalkyl substituents on the nitrogen atoms are also useful in preparing the Mannich polyamine dispersants. These materials are typically obtained by reaction of the corresponding polyamine with an epoxide, such as ethylene oxide or propylene oxide. Preferred hydroxyalkyl-substituted diamines and polyamines are those in which the hydroxyalkyl groups have less than about 10 carbon atoms. Examples of suitable hydroxyalkyl-substituted diamines and polyamines include, but are not limited to, N-(2-hydroxyethyl)ethylenediamine, N,N'-bis(2-hydroxyethyl)ethylenediamine, mono(hydroxypropyl)-diethylenetriamine, di(hydroxypropyl)tetraethylenepentamine and N-(3-hydroxybutyl)tetramethylenediamine. Higher homologs obtained by condensation of the above-mentioned hydroxyalkyl-substituted diamines and polyamines through amine groups or through ether groups are also useful.

Any conventional formaldehyde-yielding reagent is useful for the preparation of the Mannich polyamine dispersants. Examples of such formaldehyde-yielding reagents are trioxane, paraformaldehyde, trioxymethylene, hexamethylenetetramine, aqueous formalin and gaseous formaldehyde.

The carboxylic polyamine dispersants are those disclosed, for example, in the above-mentioned U.S. Patents 3,219,666 and 3,272,746, which also describe a large number of methods for their preparation. The polyamine group therein is derived from polyamine compounds characterized by a radical of the structure -NH- wherein the two remaining valences of nitrogen are satisfied by hydrogen, amino or organic radicals bonded to said nitrogen. These compounds include aliphatic, aromatic, and heterocyclic polyamines. Suitable polyamines for use in preparing the carboxylic polyamine dispersants are identical with those which are described above as being suitable for use in preparing the Mannich polyamine dispersants.

The source of the acyl group in the carboxylic polyamine dispersants is an acylating agent comprising a carboxylic acid-producing compound containing a hydrocarbyl or substituted hydrocarbyl substituent which has at least about 40 and preferably at least about 50 carbon atoms. The terminology "carboxylic acid-producing compound" includes, but is not limited to, carboxylic acids, anhydrides, acid halides, esters, amides, imides and amidines. However, the carboxylic acids and their anhydrides are preferred.

The carboxylic acid-producing compound is usually prepared by the reaction, according to well-known procedures, of a relatively low molecular weight carboxylic acid or derivative thereof with a hydrocarbyl donating agent or hydrocarbon source containing at least about 40 and preferably at least about 50 carbon atoms. The hydrocarbon source is usually aliphatic and should be substantially saturated. More specifically, at least about 95% of the total number of carbon-to-carbon covalent linkages should be saturated. The hydrocarbon source should also be substantially free from pendant groups containing more than about six aliphatic carbon atoms. The hydrocarbon source can be substituted, and examples of acceptable groups are halide, hydroxy, ether, keto, carboxyl, ester (especially lower carboalkoxy), amide, nitro, cyano, sulfoxide and sulfone. The substituents, if present, generally comprise no more than about 10 weight percent of the hydrocarbon source.

The preferred hydrocarbon sources for preparation of the carboxylic acid-producing compound are those derived from substantially saturated petroleum fractions and olefin polymers, particularly polymers of monoolefins having from 2 to about 30 carbon atoms. The hydrocarbon source can be derived, for example, from

polymers of ethylene, propene, 1-butene, isobutene, 1-octene, 3-cyclohexyl-1-butene, 2-butene and 3-pentene. Also useful are copolymers of such olefins wioth other polymerizable olefinic substances, such as styrene, chloroprene, isoprene, *p*-methylstyrene and piperylene. In general, these copolymers should contain at least about 80 percent and preferably at least about 95 percent, on a weight basis, of units derived from the aliphatic mono-olefins. Olefin polymers having a number average molecular weight between about 600 and about 5,000 (as determined by gel permeation chromatography) are preferred, although higher polymers having higher molecular weights, for example, from about 10,000 to about 100,000 or higher, can also be used. Especially suitable as hydrocarbon sources are isobutene polymers and chlorinated derivatives thereof.

Another suitable hydrocarbon source for preparation of the carboxylic acid-producing compound comprises saturated aliphatic hydrocarbons, such as highly-refined, high-molecular weight, white oils or synthetic alkanes.

In many instances, the hydrocarbon source for use in preparing the carboxylic acid-producing compound should contain an activating polar group. This polar group can serve to facilitate reaction between the hydrocarbon source and a low-molecular weight carboxylic acid or derivative thereof when such a process is used to prepare the carboxylic acid-producing compound. Preferred polar groups are halogen, especially chlorine, but other suitable polar groups include sulfide, disulfide, nitro, mercapto, as well as ketone and aldehyde carbonyl groups.

Any one of a number of known reactions can be employed for the preparation of the carboxylic acid-producing compounds. Thus, an alcohol of the desired molecular weight can be oxidized with potassium permanganate, nitric acid or a similar oxidizing agent; a halogenated olefin polymer can be reacted with a ketone; an ester of an active hydrogen-containing acid, such as acetoacetic acid, can be converted to its sodium derivative and the sodium derivative reacted with a halogenated high-molecular weight hydrocarbon, such as brominated wax or brominated polyisobutene; a high-molecular weight olefin can be ozonized; a methyl ketone of the desired molecular weight can be oxidized by means of the haloform reaction; an organometallic derivative of a halogenated hydrocarbon can be reacted with carbon dioxide; a halogenated hydrocarbon or olefin polymer can be converted to a nitrile, which is subsequently hydrolyzed. Preferably, an olefin polymer or its halogenated derivative is reacted with an unsaturated carboxylic acid or derivative thereof, such as acrylic acid, methacrylic acid, maleic acid, maleic anhydride, fumaric acid, itaconic acid, itaconic anhydride, citraconic acid, citroaconic anhydride, mesaconic acid, glutaconic acid, chloromaleic acid, aconitic acid, crotonic acid, methylcrotonic acid, sorbic acid, 3-hexenoic acid, 10-decenoic acid, 2-pentene-1,3,5-tricarboxylic acid, and the like; or a halogen-substituted carboxylic acid or derivative thereof.

The reaction of an olefin polymer or a halogenated derivative thereof with maleic acid or maleic anhydride is particularly preferred for use in preparation of the carboxylic acid-producing compound. The resulting product is then a hydrocarbyl-substituted succinic acid, or anhydride. The reaction involves merely heating the two reactants at a temperature from about 100° to about 250°C. The substituted succinic acid or anhydride thus obtained can, if desired, be converted to the corresponding acid halide by reaction with known halogenating agents, such as phosphorus trichloride, phosphorus pentachloride or thionyl chloride.

For the formation of the carboxylic polyamine dispersant, the hydrocarbyl-substituted succinic acid, or anhydride, or other carboxylic acid-producing compound, and a polyamine, such as a polyalkylene polyamine, are heated to a temperature above about 80°C, and preferably from about 100° to about 250°C. The polyamine combines with the carboxylic acid-producing compound through the predominant formation of amide, imide and/or amidine linkages (containing acyl or acylamidoyl groups). In some instances, the polyamine can be combined with the carboxylic acid-producing compound at a temperature below about 80° through predominant amine salt formation (containing acyloxy groups). The use of a diluent, such as mineral oil, benzene, toluene, naphtha or the like, is often desirable to facilitate control of the reaction temperature.

In preparing the carboxylic polyamine dispersant, the relative proportions of the carboxylic acid-producing compound and the polyamine starting materials are such that at least about a stoichiometrically equivalent amount of polyamine is used for each equivalent of carboxylic acid-producing compound. In this regard, it will be appreciated that the equivalent weight of the polyamine starting material is based on the number of amine groups therein, and the equivalent weight of the carboxylic acid-producing compound is based on the number of acidic or potentially acidic groups. By way of example, the equivalent weight of a hydrocarbyl-substituted succinic acid, or anhydride, is one-half of its molecular weight.

In an alternative method for producing the carboxylic polyamine dispersant, a polyamine, such as a polyalkylene polyamine, is reacted with a low-molecular weight, unsaturated or halogen-substituted acylating agent, such as a carboxylic acid, or anhydride. The resulting intermediate is then reacted with the hydrocarbon source, as previously described, to give the desired dispersant.

The borated polyamine dispersants prepared in accordance with the process of this invention can be incorporated into a lubricating oil by simple mixing. Suitable lubricating oils include, for example, mineral oils;

synthetic materials, such as olefin polymers, polyoxypropylene and certain dicarboxylic acid esters; vegetable oils, such as cottonseed oil, corn oil and caster oil; and animal oils, such as lard oil and sperm oil. A lubricating oil composition will typically comprise a major portion of a lubricating oil in combination with the borated polyamine dispersant, wherein the amount of borated polyamine dispersant is from about 0.01 to about 15 weight percent of the lubricating oil composition.

Concentrates containing from about 5 to about 75 weight percent or more of the subject borated polyamine dispersant in a suitable base oil, either alone or in combination with other well-known lubricant additives, can be used for blending with lubricating oils in the proportions desired for particular conditions, or used to give a finished product containing from about 0.01 to about 15 weight percent of the borated polyamine dispersant.

The borated polyamine dispersant of this invention can be used in combination with other conventional lubricating oil additives, which include, but are not limited to, wear inhibitors, extreme pressure agents, friction modifiers, antioxidants, corrosion inhibitors, detergents, dispersants, antifoam agents, viscosity index improvers, and pour point depressants.

The following examples are intended not only to illustrate the invention and are not to be construed as imposing limitations on it.

Example 1

A mixture of 550 grams (5.38 moles) of 1-hexanol and 310 grams (5.01 moles) of ortho-boric acid in 300 grams of xylene was heated at reflux temperature under atmospheric pressure with continuous removal of water by azeotrope formation. After the collection of 179 milliliters of water, xylene was removed from the reaction mixture by passing a stream of nitrogen through it at a rate of 0.94 liters/minute over a period of one hour at a temperature of 182°C. The resulting hexyl polyborate ester was a clear liquid which contained 7.7% boron.

A mixture was prepared by combining 8.47 grams of the hexyl polyborate ester with 500 grams of a conventional Mannich polyamine dispersant which was the reaction product of a polyisobutylene-substituted phenol having a molecular weight of about 1,700, formaldehyde, tetraethylenepentamine and oleic acid in a mole ratio of 1.0/4.4/0.9/0.6 respectively. The resulting mixture was heated at 160°C for 2 hours while stripping with nitrogen at a rate of 0.71 liters/minute. A total of 3.1 milliliters of volatile material was collected as a distillate from the reaction mixture. The resulting product was a clear liquid which was free of solids.

Example II

Example I was repeated except that 14.11 grams of the hexyl polyborate ester was used. A total of 4.0 milliliters of volatile material was collected as a distillate from the reaction mixture. The resulting product was a clear liquid which was free of solids.

Example III

Example I was repeated except that 28.22 grams of the hexyl polyborate ester was used, the Mannich polyamine dispersant was heated to 160°C prior in addition of the polyborate ester and the mixture of polyborate ester and Mannich polyamine dispersant was heated at 160°C for 3 hours. A total of 5.5 milliliters of volatile material was collected as a distillate from the reaction mixture. The resulting product was a clear liquid which was free of solids.

Example IV

Example III was repeated except that 56.44 grams of the hexyl polyborate ester was used. A total of 8.0 milliliters of volatile material was collected as a distillate from the reaction mixture.

Example V

Example III was repeated except that 84.66 grams of the hexyl polyborate ester was used. A total of 7.0 milliliters of volatile material was collected as a distillate from the reaction mixture.

Example VI

The borated Mannich polyamine dispersants prepared according to Examples I-V were evaluated as corrosion inhibitors using the AMIHOT Test. In the AMIHOT Test, copper and lead coupons are immersed in 100

grams of a lubricating oil which contains the additive product to be tested and also 1 %, by weight, of an equimolar mixture of 1,2-dichloroethane and 1,2-dibromoethane. This mixture is heated at a temperature of 325°F (162.8°C) for a period of 20 hours while air is bubbled through the mixture at a rate of 30 cc/min. The coupons are weighed prior to use in the test and at the end of the test after cleaning with a solvent. The ability of the additive to prevent corrosion of the coupons is reflected in the loss of weight of the coupons during the test. The smaller the weight loss, the better the ability of the additive in preventing acidic corrosion. A weight loss of 2 milligrams or less from the lead coupon indicates a satisfactory result, a weight loss of 2-5 milligrams represents a borderline test, and a weight loss of 5 milligrams or more represents an unsatisfactory result. AMIHOT Test results for the products of Examples I-V are set forth in Table I. The boron and nitrogen content of these products are also set forth in Table I.

The Mannich polyamine dispersant used as a starting material in Example I and the borated polyamine dispersants of Examples I-V were also evaluated for compatibility with fluorohydrocarbon elastomer compositions. This evaluation was carried out by suspending a sample of DuPont AK-6 Viton fluorohydrocarbon elastomer in an oil solution of the test additive at a temperature of 302°F (150°C) for seven days. At the end of this test period, the changes in the tensile strength and percent elongation of the elastomer were determined. In each case, the evaluations were carried out using an oil solution which contained 6.6% of the test sample. The results are set forth in Table II. These results demonstrate improved fluorohydrocarbon elastomer compatibility for the borated products at a boron content above about 0.21 weight percent.

TABLE I

| Test Sample | Boron Content, Wt.% | Nitrogen Content, Wt.% | AMIHOT Test[a] Weight Change, mg Lead Coupon | Copper Coupon |
|---|---|---|---|---|
| Product of Example I | 0.13 | 1.17 | −0.2 | −2.2 |
| Product of Example II | 0.21 | 1.19 | −1.2 | −2.5 |
| Product of Example III | 0.43 | 1.18 | 0.0 | −2.9 |
| Product of Example IV | 0.79 | 1.09 | +0.2 | 0.0 |
| Product of Example V | 1.17 | 1.05 | 0.0 | +0.3 |

(a) In each case, the lubricating oil used for the AMIHOT Test contained 3.7% of the test sample, 0.9% of zinc dialkyldithiophosphate and 0.5% of overbased magnesium sulfonate.

TABLE II

| Test Sample | Boron Content, Wt.% | % Change in Elastomer: % Elongation | % Change in Elastomer: Tensile Strength |
|---|---|---|---|
| Mannich Starting Material of Example I | 0 | −47 | −59 |
| Product of Example I | 0.13 | −50 | −63 |
| Product of Example II | 0.21 | −50 | −63 |
| Product of Example III | 0.43 | −44 | −53 |
| Product of Example IV | 0.79 | −46 | −56 |
| Product of Example V | 1.17 | −41 | −48 |

Example VII

In a flask equipped with a condenser and a stirrer, 236 grams of propylene oxide were added dropwise over a period of about 1.5 hours to 225.9 grams of a 70% solution of hexamethylenediamine in water. The resulting mixture was allowed to stand at room temperature for 1 hour, after which volatile material was removed by stripping with a stream of nitrogen while heating to a temperature of 150°C. This procedure yielded 377.2 grams of hydroxypropylated hexamethylenediamine.

A mixture of 29.0 grams of the hydroxypropylated hexamethylenediamine, 2,120 grams of polybutenyl-succinic anhydride (66% active with a molecular weight of about 1,400), and 1,788 grams of SX-5 base oil was heated at 190°C for two hours with nitrogen stripping.

Five hundred grams of the resulting solution of polyamine dispersant in oil was heated at 160°C for one hour while stripping with nitrogen at a rate of 0.71 liters/minute. Finally, 5 grams of hexyl polyborate ester (prepared by the procedure of Example I except that the amount of each material was doubled) was added and the mixture heated at 160°C for two hours while stripping with nitrogen at a rate of 0.71 liters/minute. A total of 4.7 milliliters of volatile material was collected as a distillate from the reaction mixture after addition of the polyborate ester. The resulting product was a clear liquid which was free of solids and contained 0.6% boron and 0.077% nitrogen.

Example VIII

Example VII was repeated except that 10 grams of the hexyl polyborate ester was used. A total of 6.5 milliliters of volatile material was collected as a distillate from the reaction mixture after addition of the polyborate ester. The resulting product was a clear liquid which was free of solids and contained 0.14% boron and 0.075% nitrogen.

Example IX

A mixture of 280 parts of amyl alcohol and 200 parts of ortho-boric acid in 140 parts of toluene was heated at reflux temperature under atmospheric pressure with continuous removal of water by azeotrope formation. After the collection of 115 parts of water, toluene was removed from the reaction mixture by distillation. Residual traces of volatile material were then removed by passing a stream of nitrogen through the distillation residue over a period of one hour at a temperature of about 168°C. The resulting amyl polyborate ester contained 8.5% boron.

A mixture was prepared by combining 12.0 parts of the amyl polyborate ester with 500 parts of a conventional Mannich polyamine dispersant which was the reaction product of a polyisobutylene-substituted phenol

having a molecular weight of about 1,900, formaldehyde, tetraethylenepentamine and oleic acid in a mole ratio of 1.0/5.1/0.9/0.6 respectively. The resulting mixture was heated at 154°C for 3 hours while stripping volatile material with nitrogen. The resulting product was a clear liquid which was free of solids and had a flash point of 360°F (182°C) as determined by the Pensky-Martin method.

Example X

Example VII was repeated except that the mixture of amyl polyborate ester and Mannich polyamine dispersant was heated at 99°C under a reflux condenser for 3 hours in the place of the 3 hour reaction period at 154°C with nitrogen stripping. As a consequence, the amyl alcohol produced by reaction of the amyl polyborate ester with the polyamine dispersant remained as a component of the resulting product. This product had a flash point of 234°F ( 112°C) as determined by the Pensky-Martin method. Comparison of this flash point with that of the product of Example IX demonstrates that removal of the alcohol resulting from the boration reaction is essential in order to obtain a boration product which has a high flash point.

## Claims

1. A process for the preparation of a borated polyamine dispersant which comprises:
   (a) reacting a polyamine dispersant with at least one polyborate ester, wherein said polyamine dispersant contains at least one amine group and reacts with the polyborate ester to release an alcohol, said polyborate ester is a derivative of at least one monohydroxy aliphatic alcohol which contains from 4 to 8 carbon atoms, and the amount of said polyborate ester is effective to provide from about 0.001 to about 2 weight per cent boron based on the weight of said polyamine dispersant; and
   (b) removing substantially all of the alcohol which is produced by said reaction.

2. The process as set forth in claim 1 wherein said polyamine dispersant is selected from the group consisting of carboxylic polyamine dispersants, alkyl polyamine dispersants, Mannich polyamine dispersants, polymeric polyamine dispersants, and treated polyamine dispersants.

3. The process as set forth in claim 2 wherein said polyamine dispersant is a Mannich polyamine dispersant.

4. The process as set forth in claim 2 wherein said polyamine dispersant is a carboxylic polyamine dispersant.

5. The process as set forth in any preceding claim wherein the ratio of hydrocarbyloxy groups to boron atoms in said polyborate ester is in the range from about 0.5 to about 1.5.

6. The process as set forth in any preceding claim wherein said polyborate ester is a metaborate ester of the formula:

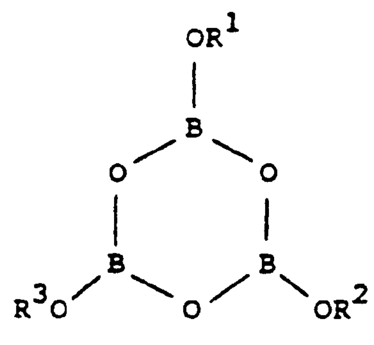

wherein $R^1$, $R^2$, and $R^3$ are independently selected from the group consisting of alkyl groups of from 4 to 8 carbon atoms.

7. The process as set forth in any preceding claim wherein said reaction of the polyamine dispersant with the polyborate ester is carried out at a temperature in the range from about 50° to about 250°C.

8. The process as set forth in any preceding claim wherein said alcohol produced by the reaction is removed by distillation.

9. The borated polyamine dispersant composition prepared by the process which comprises:
(a) reacting a polyamine dispersant with at least one polyborate ester, wherein said polyamine dispersant contains at least one amine group and at least one oil solubilising group containing at least about 40 carbon atoms, directly or indirectly bonded to a polar polyamine group, said polyamine dispersant reacts with the polyborate ester to release an alcohol, said polyborate ester is a derivative of at least one monohydroxy aliphatic alcohol which contains from 4 to 8 carbon atoms, and the amount of said polyborate ester is effective to provide from about 0.001 to about 2 weight per cent boron based on the weight of said polyamine dispersant; and
(b) removing substantially all of the alcohol which is produced by said reaction.

10. A composition as set forth in Claim 9, prepared by a process as defined in any of Claims 2 to 8.

11. A lubricant composition comprising a major portion of a lubricating oil in combination with the borated polyamine dispersant composition of Claim 9 or Claim 10 wherein the amount of said borated polyamine dispersant composition is from about 0.01 to about 15 weight percent of said lubricant composition.

## Patentansprüche

1. Verfahren zur Herstellung eines borierten Polyamindispergiermittels,
dadurch gekennzeichnet, daß
(a) ein Polyamindispergiermittel, das wenigstens eine Aminogruppe und wenigstens eine Ölsolubilisierende Gruppe mit wenigstens etwa 40 Kohlenstoffatomen enthält, die direkt oder in-indirekt an eine polare Polyamingruppe gebunden ist, und das mit einem Polyboratester unter Freisetzung eines Alkohols reagiert, mit wenigstens einem Polyboratester, der ein Derivat von wenigstens einem aliphatischen einwertigen Alkohol ist, welcher 4 bis 8 Kohlenstoffatome enthält, umgesetzt wird, wobei der Polyboratester in einer Menge angewandt wird, die etwa 0,001 bis etwa 2 Gewichtsprozent Bor, bezogen auf das Gewicht des Polyamindispergiermittels, ergibt, und
(b) praktisch der gesamte Alkohol, der durch diese Umsetzung gebildet wird, entfernt wird.

2. Verfahren nach Anspruch 1,
dadurch gekennzeichnet, daß das Polyamindispergiermittel ausgewählt wird aus carboxylischen Polyamindispergiermitteln, Alkylpolyamindispergiermitteln, Mannich-Polyamindispergiermitteln, polymeren Polyamindispergiermitteln und behandelten Polyamindispergiermitteln.

3. Verfahren nach Anspruch 2,
dadurch gekennzeichnet, daß das Polyamindispergiermittel ein Mannich-Polyamindispergiermittel ist.

4. Verfahren nach Anspruch 2,
dadurch gekennzeichnet, daß das Polyamindispergiermittel ein carboxylisches Polyamindispergiermittel ist.

5. Verfahren nach einem der vorhergehenden Ansprüche,
dadurch gekennzeichnet, daß das Verhältnis von Kohlenwasserstoffoxygruppen zu Boratomen im Polyboratester im Bereich von etwa 0,5 bis etwa 1,5 liegt.

6. Verfahren nach einem der vorhergehenden Ansprüche,
dadurch gekennzeichnet, daß der Polyboratester ein Metaboratester der Formel

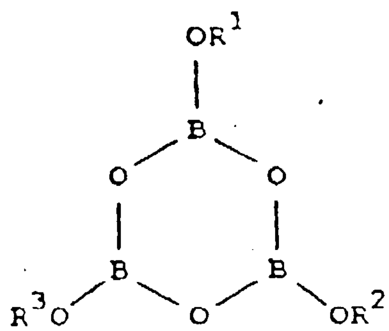

ist, worin $R^1$, $R^2$ und $R^3$ unabhängig ausgewählte Alkylgruppen mit 4 bis 8 Kohlenstoffatomen sind.

**7.** Verfahren nach einem der vorhergehenden Ansprüche,
dadurch gekennzeichnet, daß die Umsetzung des Polyamindispergiermittels mit dem Polyboratester bei einer Temperatur im Bereich von etwa 50°C bis etwa 250°C durchgeführt wird.

**8.** Verfahren nach einem der vorhergehenden Ansprüche,
dadurch gekennzeichnet, daß der durch die Umsetzung gebildete Alkohol durch Destillation entfernt wird.

**9.** Borierte Polyamindispergiermittelzusammensetzung,
dadurch gekennzeichnet, daß sie hergestellt worden ist durch
(a) Umsetzung eines Polyamindispergiermittels, das wenigstens eine Aminogruppe und wenigstens eine Ölsolubilisierende Gruppe mit wenigstens etwa 40 Kohlenstoffatomen enthält , die direkt oder indirekt an eine polare Polyamingruppe gebunden ist, und das mit einem Polyboratester unter Freisetzung eines Alkohols reagiert, mit wenigstens einem Polyboratester, der ein Derivat von wenigstens einem aliphatischen einwertigen Alkohol ist, welcher 4 bis 8 Kohlenstoffatome enthält, wobei der Polyboratester in einer Menge angewandt wird, die etwa 0,001 bis etwa 2 Gewichtsprozent Bor, bezogen auf das Gewicht des Polyamindispergiermittels, ergibt, und
(b) Entfernung praktisch des gesamten Alkohols, der durch diese Umsetzung gebildet wird.

**10.** Zusammensetzung nach Anspruch 9,
dadurch gekennzeichnet, daß sie nach einem Verfahren gemäß einem der Ansprüche 2 bis 8 hergestellt worden ist.

**11.** Schmiermittelzusammensetzung,
dadurch gekennzeichnet, daß sie einen überwiegenden Anteil eines Schmieröls in Kombination mit der borierten Polyamindispergiermittelzusammensetzung nach Anspruch 9 oder 10 enthält, worin die Menge der borierten Polyamindispergiermittelzusammensetzung etwa 0,01 bis etwa 15 Gewichtsprozent der Schmiermittelzusammensetzung ausmacht.

## Revendications

**1.** Procédé pour la préparation d'un dispersant polyaminé boraté qui comprend :
(a) la réaction d'un dispersant polyamine avec au moins un ester polyboraté, dans lequel ledit dispersant polyaminé contient au moins un groupe amine et au moins un groupe solubilisant l'huile, contenant au moins environ 40 atomes de carbone, ledit dispersant polyaminé réagit avec l'ester polyboraté pour libérer un alcool, ledit ester polyboraté est un dérivé d'au moins un alcool aliphatique monohydroxylé qui contient de 4 à 8 atomes de carbone, et la quantité dudit ester polyboraté est efficace pour fournir d'environ 0,001 à environ 2 % en poids de bore par rapport au poids dudit dispersant polyaminé ; et
(b) l'élimination de pratiquement tout l'alcool qui est produit par ladite réaction.

**2.** Procédé selon la revendication 1, dans lequel ledit dispersant polyaminé est choisi dans le groupe constitué par les dispersants polyaminés carboxyliques, les dispersants polyaminés alcoylés, les dispersants polyaminés de Mannich, les dispersants polyaminés polymères et les dispersants polyaminés traités.

**3.** Procédé selon la revendication 2, dans lequel ledit dispersant polyaminé est un dispersant polyaminé de

Mannich.

4. Procédé selon la revendication 2, dans lequel ledit dispersant polyaminé est un dispersant polyaminé carboxylique.

5. Procédé selon l'une quelconque des revendications précédentes, dans lequel le rapport des groupes hydrocarbyloxy aux atomes de bore dans ledit ester polyborate est dans la gamme d'environ 0,5 à environ 1,5.

6. Procédé selon l'une quelconque des revendications précédentes, dans lequel ledit ester polyboraté est un ester métaboraté de formule :

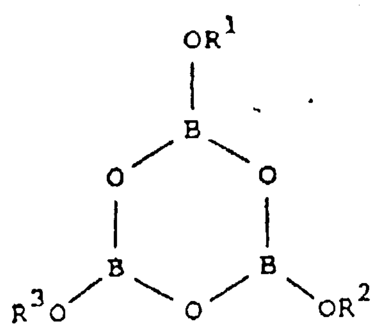

où $R^1$, $R^2$ et $R^3$ sont, indépendamment, choisis dans le groupe constitué par les groupes alcoyle ayant de 4 à 8 atomes de carbone.

7. Procédé selon l'une quelconque des revendications précédentes, dans lequel ladite réaction du dispersant polyaminé avec l'ester polyboraté est effectuée à une température dans la gamme d'environ 50° à environ 250°C.

8. Procédé selon l'une quelconque des revendications précédentes, dans lequel ledit alcool produit par la réaction est éliminé par distillation.

9. Composition de dispersant polyaminé boraté préparée par le procédé qui comprend :
(a) la réaction d'un dispersant polyaminé avec au moins un ester polyboraté, dans laquelle ledit dispersant polyaminé contient au moins un groupe amine et au moins un groupe solubilisant l'huile, contenant au moins environ 40 atomes de carbone liés directement ou indirectement à un un groupe polyamine polaire, ledit dispersant polyaminé réagit avec l'ester polyboraté pour libérer un alcool, ledit ester polyboraté est un dérivé d'au moins un alcool aliphatique monohydroxylé qui contient de 4 à 8 atomes de carbone, et la quantité dudit ester polyboraté est efficace pour fournir d'environ 0,001 à environ 2 % en poids de bore par rapport au poids dudit dispersant polyaminé ; et
(b) l'élimination de pratiquement tout l'alcool qui est produit par ladite réaction.

10. Composition selon la revendication 9, préparée par un procédé tel que défini dans l'une quelconque des revendications 2 à 8.

11. Composition lubrifiante comprenant une proportion majeure d'une huile lubrifiante en combinaison avec la composition de dispersant polyaminé boraté selon la revendication 9 ou la revendication 10, dans laquelle la quantité de ladite composition de dispersant polyaminé boraté est d'environ 0,01 à environ 15 % en poids de ladite composition lubrifiante.